# EUROPEAN PATENT SPECIFICATION

(11) **EP 3 646 967 B1**
(45) Date of publication and mention of the grant of the patent: **22.03.2023**
(21) Application number: 19205998.8
(22) Date of filing: 29.10.2019
(51) Int. Cl.: B29C 64/209, B29C 64/153, B33Y 10/00, B33Y 30/00, B23K 26/342, B22F 10/30, B23K 15/00, B23K 26/144, B23K 26/14, B23K 26/70, B23K 37/00, B33Y 50/02, B22F 10/25, B22F 12/20, B22F 12/53, B22F 12/47

(54) **ENHANCED COOLING DURING ADDITIVE MANUFACTURING**
VERBESSERTE KÜHLUNG BEI DER GENERATIVEN FERTIGUNG
REFROIDISSEMENT AMÉLIORÉE PENDANT LA FABRICATION ADDITIVE

(30) Priority: 29.10.2018 US 201816173851
(43) Date of publication of application: 06.05.2020
(73) Proprietor: Hamilton Sundstrand Corporation, Charlotte, NC 28217-4578 (US)
(72) Inventor: ACHARYA, Ranadip, Rocky Hill, CT Connecticut 06067 (US); STAROSELSKY, Alexander, Avon, CT Connecticut 06001 (US); EL-WARDANY, Tahany Ibrahim, Vernon, CT Connecticut 060 (US); FENNESSY, Colette O., West Hartford, CT Connecticut 06107 (US)
(74) Representative: Dehns

(56) References cited:
- EP-A1- 3 132 885
- WO-A1-2017/059842
- SE-C2- 540 734
- US-A1- 2006 054 079

## Description

### BACKGROUND

Embodiments of the present disclosure generally related to additive manufacturing, and more particularly, to cooling of a deposit formed via an additive manufacturing process.

Additive manufacturing techniques, such as directed energy deposition for example, may be used to fabricate a component having a predetermined three-dimensional structure. Such a process typically includes depositing a material layer-by-layer or volume-by-volume to form the structure, rather than by removing material from an existing component. Additive manufacturing techniques may improve efficiency and reduce waste while expanding manufacturing capabilities, such as by permitting seamless construction of complex configurations which, when using conventional manufacturing techniques, would have to be assembled from two or more separate components. The opportunity for additive techniques to replace subtractive processes depends on several factors, such as the range of materials available for use in the additive processes, the size and surface finish that can be achieved using additive techniques, and the rate at which material can be added. Additive manufacturing techniques may advantageously be capable of fabricating complex precision net-shape components ready for use. In some cases, however, the additive techniques may generate "near-net shape" products that require some degree of finishing.

One type of additive manufacturing process is a direct energy deposition process. During a direct energy deposition process, powder is injected from one or more nozzles into a focused beam of a laser. The localized heating melts a small area on the substrate and powder contacting the melt pool will also melt to generate a deposit on the substrate upon solidification.

Direct energy deposition can generate high residual stresses as a result of the geometry being built, the build strategy employed, use of materials with very different thermal expansions, or other factors. In addition, it is difficult to control the microstructure, and therefore the mechanical properties, of the component being formed.
Additive manufacturing assemblies are disclosed in WO 2017/059842, US 2006/054079 and SE 540734 C2.

### BRIEF DESCRIPTION

According to the invention, an additive manufacturing assembly is provided as defined by claim 1.

In addition to one or more of the features described above, or as an alternative, in further embodiments the controller is programmed to control an angle of the at least one cooling nozzle relative to the substrate.

In addition to one or more of the features described above, or as an alternative, in further embodiments the controller is programmed to control a flow rate of the cooling fluid output from the cooling nozzles.

In addition to one or more of the features described above, or as an alternative, in further embodiments the energy beam forms a melt pool in the substrate, and the controller is programmed to position the at least one nozzle such that the cooling fluid is directed toward a trailing edge of the melt pool.

In addition to one or more of the features described above, or as an alternative, in further embodiments a portion of plurality of cooling nozzles is arranged forward of the energy source with respect to the scan direction and another portion of the plurality cooling nozzles is disposed behind the energy source with respect to the scan direction.

In addition to one or more of the features described above, or as an alternative, in further embodiments the controller controls the another portion of the plurality cooling nozzles to achieve the desired convection heat transfer coefficient.

In addition to one or more of the features described above, or as an alternative, in further embodiments the portion of plurality of cooling nozzles arranged forward of the energy source with respect to the scan direction is non-operational.

In addition to one or more of the features described above, or as an alternative, in further embodiments the desired convection heat transfer coefficient is selected to control a morphology of the additive material deposited on the substrate.

According to the invention, a method is provided as defined by claim 8..

In addition to one or more of the features described above, or as an alternative, in further embodiments controlling the convection heat transfer coefficient includes directing a flow of cooling fluid toward the substrate.

In addition to one or more of the features described above, or as an alternative, in further embodiments directing a flow of cooling fluid toward the substrate includes operating at least one cooling nozzle positioned behind an energy source relative to a scan direction.

In addition to one or more of the features described above, or as an alternative, in further embodiments controlling the convection heat transfer coefficient includes controlling an orientation of one or more cooling nozzles relative to the substrate.

In addition to one or more of the features described above, or as an alternative, in further embodiments controlling the convection heat transfer coefficient includes controlling a flow rate of the cooling fluid.

In addition to one or more of the features described above, or as an alternative, in further embodiments depositing additive material onto the substrate further comprises directing an energy beam toward a surface of the substrate to form a melt pool and directing a mixture of additive material and propellant gas onto the melt pool.

In addition to one or more of the features described above, or as an alternative, in further embodiments directing the flow of cooling fluid toward the substrate includes directing the flow of cooling fluid toward a trailing edge of the melt pool.

In addition to one or more of the features described above, or as an alternative, in further embodiments comprising selecting the convective heat transfer coefficient based on a desired morphology of the additive material.

### BRIEF DESCRIPTION OF THE DRAWINGS

The following descriptions should not be considered limiting in any way. With reference to the accompanying drawings, like elements are numbered alike:
FIG. 1 is a schematic diagram of an example of an assembly for performing an additive manufacturing process; and
FIG. 2 is a schematic diagram of additive manufacturing assembly having forced cooling according to an embodiment;
FIG. 3 is a plan view of a portion of the cooling system of the additive manufacturing assembly of FIG. 2 according to an embodiment.

### DETAILED DESCRIPTION

A detailed description of one or more embodiments of the disclosed apparatus and method are presented herein by way of exemplification and not limitation with reference to the Figures.

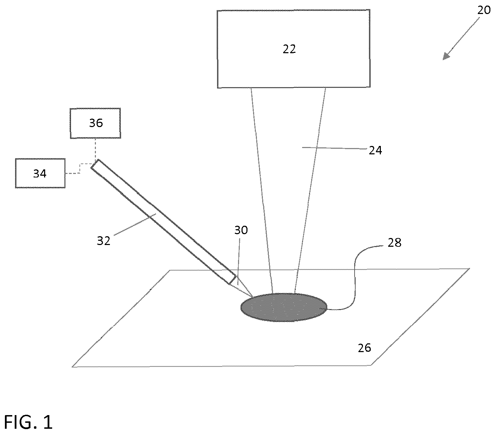

With reference now to FIG. 1, an example of a material deposition assembly 20 suitable for performing an additive manufacturing process, such as a direct energy deposition process for example, is illustrated. The assembly 20 includes an energy source 22 capable of directing an energy beam 24 toward a substrate 26. The energy beam 24 may be a laser beam, an electron beam, an ion beam, a cluster beam, a neutral particle beam, a plasma jet, or a simple electrical discharge (arc). The energy beam 24 may have an energy density sufficient to melt a small portion of the substrate 26, thereby forming a melt-pool 28, without losing substrate material due to evaporation, splattering, erosion, shock-wave interactions, or other dynamic effects. The concentrated energy beam 24 may be continuous or intermittently pulsed.

The melt-pool 28 may include liquefied material from the substrate 26 as well as additive material. In the illustrated, non-limiting embodiment, additive material, such as a powdered material for example, may be directed onto the melt-pool 28 in an additive material and propellant gas mixture 30 exiting one or more nozzles 32. The nozzles 32 may fluidly communicate with a material reservoir 34 and a propellant gas reservoir 36. The nozzles 32 create a flow of the additive material and propellant gas mixture 30 that may substantially converge into an apex or region of smallest physical cross-section so that the material of the additive material and propellant gas mixture 30 is incorporated into the melt-pool 28. The material deposition assembly 20 is movable relative to the substrate 26 to forms a layer on the substrate 26. Additional layers may be formed adjacent to or on top of the initial layer to fabricate solid, three-dimensional objects.

While the additive material deposited onto the substrate 26 is illustrated and described as being in powdered form, it should be understood that embodiments where the additive material has another form are also within the scope of the disclosure. For example, the additive material may be provided as a wire feed material, a foil material, or any other type of material known for use in additive manufacturing processes.

In certain applications, the additive manufacturing process can generate high residual stresses in the component or build part being formed. These high residual stresses are a result of several factors including, but not limited to, the geometry of the component, the build strategy used, and the materials being used. However, by controlling the rate at which the component is cooled during formation, these residual stresses may be reduced. Accordingly, it may be advantageous to control the cooling of the deposited additive material and/or the area surrounding the deposited additive material during an additive manufacturing process.

In an embodiment, the rate at which the component is cooled during formation may be controlled via the heat transfer coefficient of the deposited additive material, also referred to herein as the "convection coefficient." More specifically, this convection coefficient of the additive material may be manipulated to achieve a desired temperature gradient ratio at the melt pool 28. The ratio of the temperature gradient is a comparison of the temperature gradient adjacent a top surface of the melt pool 28 to a temperature gradient adjacent a bottom surface of the melt pool 28. During a typical additive manufacturing process, the temperature gradient adjacent the top surface of the melt pool 28 and the temperature gradient adjacent the bottom surface of the melt pool 28 are distinct such that the ratio is very small, such as having a magnitude of about 10⁻⁴ for example. By controlling the convection coefficient of the additive material, the temperature gradient adjacent the top surface of the melt pool 28 may be increased, thereby altering the ratio of the temperature gradient.

In an embodiment, the natural convection heat transfer coefficient of an additive material is usually of the order of about 1-5 W/m²K. In an embodiment, additional cooling, such as forced convection for example, may be provided to the deposited additive material during the additive manufacturing process to increase the convection heat transfer coefficient approximately two orders of magnitude greater than the natural convection heat transfer coefficient. For example, with the application of forced cooling, the convection heat transfer coefficient may be 100 W/m²K. The additional cooling provided by this increased convection coefficient may be used to remove heat from the hot sections of the melt pool 28 and/or from the material being deposited to form the build part.

In an embodiment, the convection coefficient, and the resulting temperature gradient at the top surface of the melt pool 28 is controlled to achieve desired mechanical properties or a morphology of the deposited material. For example, by controlling the convention coefficient, the deposited additive material may have a refined microstructure. In an embodiment, the structure of the deposited material may include columnar grains having a fine dendritic structure. With the additional cooling resulting in an increased convection coefficient, the dendrite spacing may be reduced from about 1 micron (in embodiments absent forced cooling) to about 250 nm as a result of the fast cooling. Similarly, the convection coefficient may be controlled to achieve a reduction in grain size. In an embodiment, the grain size achieved during an additive manufacturing process including forced cooling is less than half the grain size achieved during an additive manufacturing process with a natural convection coefficient (absent forced cooling). In addition, the yield strength of the structure being formed may increase by up to, or even more than, 30%.

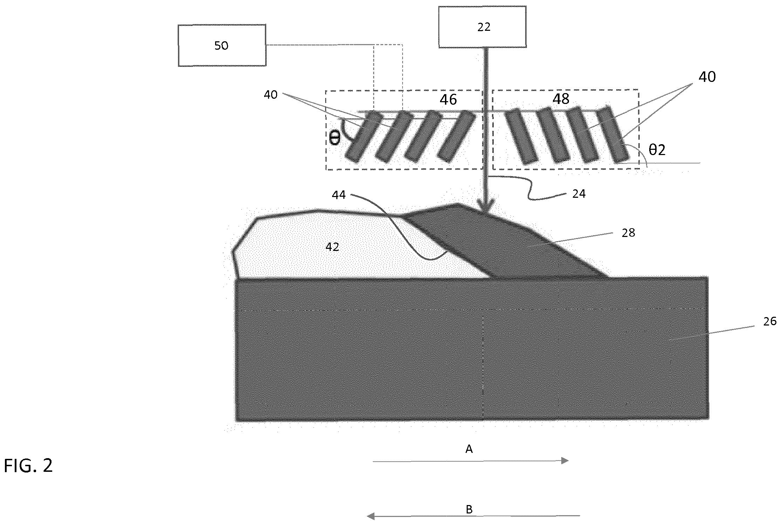

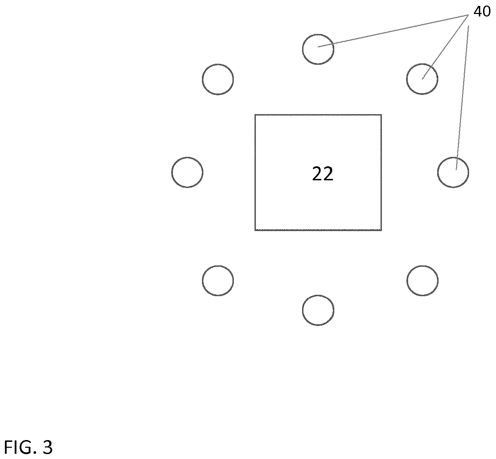

As previously suggested, the convection coefficient may be controlled during an additive manufacturing process by applying forced cooling to the process, such as forced convection for example. With reference now to FIG. 2, in an embodiment, the additive manufacturing assembly includes a cooling system having cooling nozzles 40 positioned adjacent the energy source 22 such that the cooling nozzles 40 move in conjunction with the energy source 22 in a scan direction. The cooling nozzles 40 are arranged generally circumferentially about the energy source 22 and/or the energy beam 24 output from the energy source 22 (see FIG. 3). Each of the cooling nozzles 40 is operable to deliver a fluid flow toward the adjacent surface of the substrate 26. In embodiments where the cooling fluid is not air, the cooling nozzles 40 may be coupled to a fluid source (not shown).

The cooling nozzles 40 positioned about the energy source 22 may be controlled to facilitate further or forced cooling via convection to the substrate 26 based on the scan direction. As shown, the cooling nozzles 40 may be divided into various zones or regions based on their position about the energy source 22 and the scan directions available to the assembly 20. In an embodiment, the cooling nozzles 40 are operated to cool the non-solidified region or mushy portion of the build object, indicated at 42 in FIG. 2, behind the trailing edge 44 of the melt pool 28. Accordingly, only the portion of the cooling nozzles 40 disposed behind the energy source 22 with respect to the scan direction are operated to further cool the substrate 26.

In the illustrated, non-limiting embodiment, the cooling nozzles 40 are generally positioned within a first zone 46, disposed adjacent a first side of the energy source 22, or a second zone 48, disposed adjacent a second, opposite side of the energy source 22. As the energy source 22 and cooling nozzles 40 move in a first scan direction, indicated by arrow A, the cooling nozzles 40 in the first zone 46 are operated to deliver a fluid flow, thereby providing forced convection, that supplements the natural convection of the substrate 26 and deposited material. During movement in this first scan direction, the cooling nozzles 40 within the second zone 48 may be non-operational. When the energy source 22 and cooling nozzles 40 move in a second scan direction, indicated by arrow B, the cooling nozzles 40 within the second zone 48 are operated to provide forced convection, and the cooling nozzles 40 within the first zone 46 are non-operational. In an embodiment, the cooling nozzles 40 are movably mounted. Accordingly, during operation of one or more of the cooling nozzles 40, an orientation of the nozzle relative to the surface of the deposited additive material and/or substrate 26 is adjustable, as indicated by the angle θ2. In addition, the velocity or flow rate at which a fluid is output from the cooling nozzles 40 may be controlled.

The cooling system may additionally include a controller, illustrated schematically at 50, operatively coupled to the one or more cooling nozzles 40. The controller 50 may be the same controller, or alternatively, may be a different controller than the controller associated with operation of the energy source 22 and/or the deposition nozzle 32 (FIG. 1). In an embodiment, the controller 50 is additionally arranged in communication with the at least one deposition nozzle 32 for delivering the additive material and propellant gas mixture 30 to the substrate 26. The controller 50 is programmed to determine which cooling nozzles 40 of the cooling system to operate, and based on a desired convection coefficient, is programmed to control the nozzle orientation and the flow rate of the cooling fluid output from the nozzles to achieved the desired convection coefficient. In an embodiment, the controller 50 is additionally programmed to determine the convection coefficient based on one or more desired properties of the microstructure, such as grain size or strength for example.

Controlling the convective coefficient of the additive manufacturing process through the use of one or more cooling nozzles 40 enables a reduction in distortion for a component having a complex geometry. In addition, the cooling allows for a refinement of the microstructure of the component being formed, such as a reduction in grain size and dendrite spacing, and increased mechanical properties.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the invention. Therefore, it is intended that the present disclosure not be limited to the particular embodiment disclosed as the best mode contemplated for carrying out this present disclosure, but that the present disclosure will include all embodiments falling within the scope of the claims.

## Claims

1. An additive manufacturing assembly comprising:
a substrate (26);
a nozzle (32) for depositing additive material onto the substrate;
a plurality of cooling nozzles (40) for supplying a cooling fluid to at least a portion of the substrate, the cooling nozzles being movable relative to the substrate; and
a controller (50) operably coupled to the cooling nozzles, wherein the controller is programmed to control operation of the cooling nozzles to achieve a desired convection heat transfer coefficient of the additive material; and further comprising an energy source (22) for directing an energy beam (24) onto the substrate, the energy source being coupled to the controller and movable relative to the substrate in a scan direction,
the plurality of cooling nozzles being positioned circumferentially about the energy source; and wherein the cooling nozzles are divided into various regions based on their position about the energy source and the scan direction, and wherein the controller is programmed to select a region of cooling nozzles for supplying the cooling fluid based on the scan direction.

2. The additive manufacturing assembly of claim 1, wherein the controller (50) is programmed to control an angle of the at least one cooling nozzle (40) relative to the substrate (26), and/or wherein the controller is programmed to control a flow rate of the cooling fluid output from at least one cooling nozzle.

3. The additive manufacturing assembly of claim 2, wherein the energy beam (24) forms a melt pool (28) in the substrate, and the controller is programmed to position at least one nozzle such that the cooling fluid is directed toward a trailing edge of the melt pool.

4. The additive manufacturing assembly of claim 2, wherein the energy source (22) is movable relative to the substrate in a scan direction, a portion of plurality of cooling nozzles is arranged forward of the energy source with respect to the scan direction and another portion of the plurality cooling nozzles is disposed behind the energy source with respect to the scan direction.

5. The additive manufacturing assembly of claim 4, wherein the controller (50) controls the another portion of the plurality cooling nozzles to achieve the desired convection heat transfer coefficient.

6. The additive manufacturing assembly of claim 4 or 5, wherein the portion of plurality of cooling nozzles arranged forward of the energy source with respect to the scan direction is non-operational.

7. The additive manufacturing assembly of any preceding claim, wherein the desired convection heat transfer coefficient is selected to control a morphology of the additive material deposited on the substrate.

8. A method of forming a three-dimensional build object on a substrate, the method comprising:
depositing additive material onto the substrate;
directing an energy beam toward a surface of the substrate to form a melt pool; and
controlling a convective heat transfer coefficient of the additive material deposited onto the substrate; wherein controlling the convection heat transfer coefficient includes directing a flow of cooling fluid toward the substrate, and wherein directing a flow of cooling fluid toward the substrate includes operating at least one cooling nozzle positioned behind an energy source relative to a scan direction, wherein the cooling nozzles are divided into various regions based on their position about the energy source and the scan direction, and wherein the method includes selecting a region of cooling nozzles for supplying the cooling fluid based on the scan direction.

9. The method of claim 8, wherein controlling the convection heat transfer coefficient includes controlling an orientation of one or more cooling nozzles relative to the substrate, or wherein controlling the convection heat transfer coefficient includes controlling a flow rate of the cooling fluid.

10. The method of any of claims 8 and 9, wherein depositing additive material onto the substrate further comprises:
directing a mixture of additive material and propellant gas onto the melt pool.

11. The method of any of claims 8 to 10, further comprising selecting the convective heat transfer coefficient based on a desired morphology of the additive material.

## Patentansprüche

1. Anordnung zur generativen Fertigung, umfassend:
ein Substrat (26);
eine Düse (32) zum Aufbringen von generativem Material auf das Substrat;
eine Vielzahl von Kühldüsen (40) zum Zuführen eines Kühlfluids zu mindestens einem Teil des Substrats, wobei die Kühldüsen relativ zu dem Substrat bewegbar sind; und
eine Steuerung (50), die betriebsfähig mit den Kühldüsen gekoppelt ist, wobei die Steuerung programmiert ist, um den Betrieb der Kühldüsen zu steuern, um einen gewünschten Konvektionswärmeübertragungskoeffizienten des generativen Materials zu erreichen; und ferner umfassend eine Energiequelle (22) zum Richten eines Energiestrahls (24) auf das Substrat, wobei die Energiequelle mit der Steuerung gekoppelt und relativ zu dem Substrat in einer Abtastrichtung bewegbar ist,
wobei die Vielzahl von Kühldüsen in Umfangsrichtung um die Energiequelle positioniert ist; und wobei die Kühldüsen auf Grundlage ihrer Position um die Energiequelle und der Abtastrichtung in verschiedene Bereiche unterteilt sind und wobei die Steuerung programmiert ist, um einen Bereich von Kühldüsen zum Zuführen des Kühlfluids auf Grundlage der Abtastrichtung auszuwählen.

2. Anordnung zur generativen Fertigung nach Anspruch 1, wobei die Steuerung (50) programmiert ist, um einen Winkel der mindestens einen Kühldüse (40) relativ zu dem Substrat (26) zu steuern und/oder wobei die Steuerung programmiert ist, um eine Durchflussrate des Kühlfluids, das von mindestens einer Kühldüse ausgegeben wird, zu steuern.

3. Anordnung zur generativen Fertigung nach Anspruch 2, wobei der Energiestrahl (24) ein Schmelzbad (28) in dem Substrat ausbildet und die Steuerung programmiert ist, um mindestens eine Düse so zu positionieren, dass das Kühlfluid auf eine Hinterkante des Schmelzbades gerichtet ist.

4. Anordnung zur generativen Fertigung nach Anspruch 2, wobei die Energiequelle (22) relativ zu dem Substrat in einer Abtastrichtung bewegbar ist, ein Teil einer Vielzahl von Kühldüsen in Bezug auf die Abtastrichtung vor der Energiequelle angeordnet ist und ein anderer Teil der Vielzahl von Kühldüsen in Bezug auf die Abtastrichtung hinter der Energiequelle angeordnet ist.

5. Anordnung zur generativen Fertigung nach Anspruch 4, wobei die Steuerung (50) den anderen Teil der Vielzahl von Kühldüsen steuert, um den gewünschten Konvektionswärmeübertragungskoeffizienten zu erreichen.

6. Anordnung zur generativen Fertigung nach Anspruch 4 oder 5, wobei der Teil der Vielzahl von Kühldüsen, der in Bezug auf die Abtastrichtung vor der Energiequelle angeordnet ist, nicht betriebsbereit ist.

7. Anordnung zur generativen Fertigung nach einem der vorhergehenden Ansprüche, wobei der gewünschte Konvektionswärmeübertragungskoeffizient ausgewählt ist, um eine Morphologie des auf das Substrat aufgebrachten generativen Materials zu steuern.

8. Verfahren zum Ausbilden eines dreidimensionalen Bauobjekts auf einem Substrat, wobei das Verfahren Folgendes umfasst:
Aufbringen von generativem Material auf das Substrat;
Richten eines Energiestrahls auf eine Oberfläche des Substrats, um ein Schmelzbad auszubilden; und
Steuern eines konvektiven Wärmeübertragungskoeffizienten des auf das Substrat aufgebrachten generativen Materials; wobei das Steuern des Konvektionswärmeübertragungskoeffizienten Leiten eines Kühlfluidstroms zum Substrat beinhaltet und wobei das Leiten eines Kühlfluidstroms zum Substrat Betreiben mindestens einer Kühldüse beinhaltet, die relativ zu einer Abtastrichtung hinter einer Energiequelle positioniert ist, wobei die Kühldüsen auf Grundlage ihrer Position um die Energiequelle und der Abtastrichtung in verschiedene Bereiche unterteilt sind und wobei das Verfahren Auswählen eines Bereichs von Kühldüsen zum Zuführen des Kühlfluids auf Grundlage der Abtastrichtung beinhaltet.

9. Verfahren nach Anspruch 8, wobei das Steuern des Konvektionswärmeübertragungskoeffizienten Steuern einer Ausrichtung einer oder mehrerer Kühldüsen relativ zu dem Substrat beinhaltet oder wobei das Steuern des Konvektionswärmeübertragungskoeffizienten Steuern einer Durchflussrate des Kühlfluids beinhaltet.

10. Verfahren nach einem der Ansprüche 8 und 9, wobei das Aufbringen von generativem Material auf das Substrat ferner Folgendes umfasst:
Richten einer Mischung aus generativem Material und Treibgas auf das Schmelzbad.

11. Verfahren nach einem der Ansprüche 8 bis 10, ferner umfassend Auswählen des konvektiven Wärmeübertragungskoeffizienten auf Grundlage einer gewünschten Morphologie des generativen Materials.

## Revendications

1. Ensemble de fabrication additive comprenant :
un substrat (26) ;
une buse (32) pour déposer un matériau additif sur le substrat ; une pluralité de buses de refroidissement (40) pour fournir un fluide de refroidissement à au moins une partie du substrat, les buses de refroidissement étant mobiles par rapport au substrat ; et
un dispositif de commande (50) couplé de manière opérationnelle aux buses de refroidissement, dans lequel le dispositif de commande est programmé pour commander l'actionnement des buses de refroidissement afin d'obtenir un coefficient de transfert de chaleur par convection souhaité du matériau additif ; et
comprenant en outre une source d'énergie (22) pour orienter un faisceau d'énergie (24) sur le substrat, la source d'énergie étant couplée au dispositif de commande et mobile par rapport au substrat dans une direction de balayage,
la pluralité de buses de refroidissement étant positionnées circonférentiellement autour de la source d'énergie ; et dans lequel les buses de refroidissement sont divisées en diverses régions sur la base de leur position autour de la source d'énergie et de la direction de balayage, et dans lequel le dispositif de commande est programmé pour sélectionner une région de buses de refroidissement afin de fournir le fluide de refroidissement sur la base de la direction de balayage.

2. Ensemble de fabrication additive selon la revendication 1, dans lequel le dispositif de commande (50) est programmé pour commander un angle de l'au moins une buse de refroidissement (40) par rapport au substrat (26), et/ou dans lequel le dispositif de commande est programmé pour commander un débit du fluide de refroidissement sortant d'au moins une buse de refroidissement.

3. Ensemble de fabrication additive selon la revendication 2, dans lequel le faisceau d'énergie (24) forme un bain de fusion (28) dans le substrat, et le dispositif de commande est programmé pour positionner au moins une buse de sorte que le fluide de refroidissement est orienté vers un bord de fuite du bain de fusion.

4. Ensemble de fabrication additive selon la revendication 2, dans lequel la source d'énergie (22) est mobile par rapport au substrat dans une direction de balayage, une partie d'une pluralité de buses de refroidissement est agencée en avant de la source d'énergie par rapport à la direction de balayage et une autre partie de la pluralité de buses de refroidissement est disposée derrière la source d'énergie par rapport à la direction de balayage.

5. Ensemble de fabrication additive selon la revendication 4, dans lequel le dispositif de commande (50) commande l'autre partie de la pluralité de buses de refroidissement pour obtenir le coefficient de transfert de chaleur par convection souhaité.

6. Ensemble de fabrication additive selon la revendication 4 ou 5, dans lequel la partie d'une pluralité de buses de refroidissement agencée en avant de la source d'énergie par rapport à la direction de balayage est non opérationnelle.

7. Ensemble de fabrication additive selon une quelconque revendication précédente, dans lequel le coefficient de transfert de chaleur par convection souhaité est sélectionné pour commander une morphologie du matériau additif déposé sur le substrat.

8. Procédé de formation d'un objet de construction tridimensionnel sur un substrat, le procédé comprenant :
le dépôt d'un matériau additif sur le substrat ;
l'orientation d'un faisceau d'énergie vers une surface du substrat pour former un bain de fusion ; et
la commande d'un coefficient de transfert de chaleur par convection du matériau additif déposé sur le substrat ; dans lequel la commande du coefficient de transfert de chaleur par convection comporte l'orientation d'un flux de fluide de refroidissement vers le substrat, et dans lequel l'orientation d'un flux de fluide de refroidissement vers le substrat comporte l'actionnement d'au moins une buse de refroidissement positionnée derrière une source d'énergie par rapport à une direction de balayage, dans lequel les buses de refroidissement sont divisées en diverses régions sur la base de leur position autour de la source d'énergie et de la direction de balayage, et dans lequel le procédé comporte la sélection d'une région de buses de refroidissement pour fournir le fluide de refroidissement sur la base de la direction de balayage.

9. Procédé selon la revendication 8, dans lequel la commande du coefficient de transfert de chaleur par convection comporte la commande d'une orientation d'une ou de plusieurs buses de refroidissement par rapport au substrat, ou dans lequel la commande du coefficient de transfert de chaleur par convection comporte la commande d'un débit du fluide de refroidissement.

10. Procédé selon l'une quelconque des revendications 8 et 9, dans lequel le dépôt d'un matériau additif sur le substrat comprend en outre :
l'orientation d'un mélange de matériau additif et de gaz propulseur sur le bain de fusion.

11. Procédé selon l'une quelconque des revendications 8 à 10, comprenant en outre la sélection du coefficient de transfert de chaleur par convection sur la base d'une morphologie souhaitée du matériau additif.
